(19) Europäisches Patentamt
European Patent Office
Office européen des brevets

(11) **EP 3 842 770 B1**

(12) **EUROPÄISCHE PATENTSCHRIFT**

(45) Veröffentlichungstag und Bekanntmachung des Hinweises auf die Patenterteilung:
**30.04.2025 Patentblatt 2025/18**

(21) Anmeldenummer: **20217022.1**

(22) Anmeldetag: **23.12.2020**

(51) Internationale Patentklassifikation (IPC):
**G01J 1/02** (2006.01)  **A61B 5/00** (2006.01)
**G01J 1/42** (2006.01)

(52) Gemeinsame Patentklassifikation (CPC):
**G01J 1/0219; G01J 1/0233; G01J 1/0247;**
**G01J 1/0271; G01J 1/4204; G01J 1/429;**
G01J 2001/4266

(54) **UV-BODYGUARD**

UV BODYGUARD

AGENT DE PROTECTION CONTRES LES UV

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2019 DE 102019220563**

(43) Veröffentlichungstag der Anmeldung:
**30.06.2021 Patentblatt 2021/26**

(73) Patentinhaber: **ajuma GmbH**
**80689 München (DE)**

(72) Erfinder:
• **BARTH, Annette**
**80689 München (DE)**
• **MEYER-ARNEK, Julian**
**80689 München (DE)**

(74) Vertreter: **Weickmann & Weickmann PartmbB**
**Postfach 860 820**
**81635 München (DE)**

(56) Entgegenhaltungen:
**WO-A2-2018/208166     US-B1- 10 132 680**

**Beschreibung**

Die vorliegende Erfindung betrifft ein System umfassend eine UV-Erfassungseinheit und ein Verfahren zum Anpassen von UV-Forecast-Daten.

Ohne die Sonne wäre ein Leben auf der Erde nicht möglich. Die Sonne sendet neben dem sichtbaren Licht und Infrarot-Strahlung, die wir als Wärme wahrnehmen, auch ultraviolette (UV) Strahlung aus. Als UV-Strahlung wird elektromagnetische Strahlung im Wellenlängenbereich von 100 nm bis 400 nm bezeichnet. UV-Strahlung ist unsichtbar und nach Wellenlängen weiter in die Unterbereiche UVA (315-400 nm), UVB (280-315 nm) und UVC (100-280 nm) eingeteilt. Während UVC-Strahlung wegen der Absorption in der Ozonschicht und durch den molekularen Sauerstoff in der gesamten Erdatmosphäre die Erdoberfläche normalerweise nicht erreichen kann, dringt UVA- und wenig UVB-Strahlung aber bis zur Erdoberfläche vor und kann biologische Wirkungen an der menschlichen Gesundheit hervorrufen.

UV-B-Strahlung regt die Bildung von lebenswichtigem Vitamin D3 an, das eine wesentliche Rolle beim Aufbau und Erhalt der Knochen im menschlichen Körper spielt. Ein Vitamin-D-Mangel wird meist dadurch verursacht, dass die Haut zu selten der Sonne ausgesetzt ist. Aber auf der anderen Seite kann UV-Strahlung auch erhebliche negative Auswirkungen auf den menschlichen Körper und vor allem auf die Haut haben, wobei ein Überschreiten der UV-Strahlung eines gewissen Grenzwerts akute Hautschäden verursachen und sogar Hautkrebs erregen kann.

Vor diesem Hintergrund sind im Stand der Technik Produkte bekannt, die dafür eingerichtet sind, UV-Strahlung zu messen und auf Basis der gemessenen Daten eine Analyse durchzuführen, eine Warnung beim Überschreiten von Grenzwerten zu geben bzw. eine Prognose über eine zukünftige erlaubte Sonnenverweildauer zu erstellen.

Aus der Druckschrift WO 2018/208166 A2 ist eine Vorrichtung zur Ermittlung einer UV-Belastung gemäß dem Oberbegriff des Hauptanspruchs 1 bekannt.

Problematisch bei der Messung von UV-Strahlung ist, dass bekannte UV-Messgeräte lediglich in der Lage sind, eine spektrale Summe der einfallenden Strahlung zu erfassen (Integral über alle Wellenlängen des Empfindlichkeitsbereichs des Sensors). Unterschiedliche Teile des Spektrums stellen jedoch in unterschiedlichem Maße eine Belastung für die menschliche Haut dar, so dass gleiche Sensorergebnisse unterschiedlichen Belastungswerten für die Haut entsprechen können. UVA-Strahlung (UV-Strahlung mit einer Wellenlänge > 315 nm) dringt tief in die Haut ein und schädigt diese langfristig. UVB-Strahlung (UV-Strahlung mit einer Wellenlänge < 315 nm) verursacht kurzfristige Effekte wie etwa Sonnenbrand.

Um diese unterschiedlichen Belastungen der Haut zu berücksichtigen, hat sich als physikalische Einheit für die Quantifizierung der UV-Strahlung der international anerkannte UV Index etabliert. Der UV-Index ist definiert durch das Integral des Produkts von Erythemfunktion $s_{er}(\lambda)$ und spektraler Irradianz $E(\lambda)$ im Wellenlängenbereich von etwa $\lambda$=250 bis etwa $\lambda$=400nm. Durch einen Vorfaktor k=40 $m^2$/W wird der UV-Index zu einer dimensionslosen Größe:

$$I_{UV} = k * \int_{250nm}^{400nm} E(\lambda\} * s_{er}(\lambda)d$$

Die Erythemfunktion bildet dabei ein Maß für die Belastung der menschlichen Haut ab (Erythem: dermatologischer Ausdruck für Hautrötung oder Hautentzündung). Die Erythemfunktion kann auch als spektrale Empfindlichkeit der Haut verstanden werden und kann sich beispielsweise an der IEC 60335-2-27 der DIN 5050, Teil 1, oder der DIN EN 60 335-2-27 orientieren.

Für eine Prognose werden Forecast-Daten von zum Beispiel einem Wetterdienst verwendet. Allerdings kann eine solche Prognose verbesserungsbedürftig sein, weil die Forecast-Daten im Vergleich stark von der tatsächlich zum Vorhersagezeitpunkt gemessenen UV-Strahlung abweichen können. Dies liegt einerseits daran, dass viele Forecast-Daten über UV-Strahlung allein für einen klaren Himmel (clear sky) erstellt werden, wobei der Einfluss von Wolken nicht mitberücksichtigt wird. Andererseits, auch wenn die UV-Forecast-Daten mit der vom Wettermodell prognostizierten Bewölkung erstellt werden, können viele andere Faktoren wie z.B. die konkrete Bewölkungssituation, der Bodentyp bzw. die Geländehöhe eines Ortes, an dem der Benutzer sich befindet, die UV-Strahlung beeinflussen. Die Gitterauflösung der Wettermodelle von typischerweise 10km oder mehr Kilometern Maschenweite lässt eine ortsaufgelöste UV-Vorhersage nicht zu, da beispielsweise durchbrochene Bewölkung in eine mittlere Bewölkungsdichte über eine komplette Gitterzelle verschmiert wird und somit nicht adäquat dargestellt werden kann. Mit der Geländehöhe nimmt die UV-Strahlung um ca. 10 Prozent pro 1000 Höhenmeter zu. Zudem reflektiert der Boden teilweise die UV-Strahlung, wobei die Albedo, ein Maß für das Rückstrahlvermögen, je nach Bodentyp stark variiert. Zum Beispiel haben bestimmte Bodentypen, wie Schnee oder Sand eine höhere Albedo, sodass UV-Strahlung auf diese Weise verstärkt werden kann.

Es ist daher Aufgabe der vorliegenden Erfindung, gemäß den nachfolgenden Aspekten ein verbessertes System sowie ein verbessertes Verfahren anzubieten, welche eine oder mehrere der vorstehenden genannten Nachteile des Stands der Technik adressieren. Diese Aufgabe wird durch ein System zur Ermittlung einer UV-Belastung gemäß dem Gegenstand des Hauptanspruchs 1 sowie durch ein Verfahren zur Ermittlung einer UV-Belastung gemäß dem Gegenstand des Anspruchs 2 gelöst.

Gemäß einem ersten Aspekt der Erfindung wird

3      **EP 3 842 770 B1**      4

diese Aufgabe gelöst durch ein System zur Ermittlung einer UV-Belastung, umfassend: eine tragbare Vorrichtung, umfassend eine UV-Erfassungseinheit, welche dafür eingerichtet ist, eine auf die UV-Erfassungseinheit eingestrahlte UV-Strahlung zu erfassen, eine Datenverarbeitungseinheit, die dafür eingerichtet ist, wenigstens einen Messwert der erfassten UV-Strahlung von der Vorrichtung zu empfangen, wobei die Datenverarbeitungseinheit ferner dafür eingerichtet ist, einen auf eine Ozonsituation bezogenen Ozonwert für einen Standort, an dem sich die UV-Erfassungseinheit befindet, aus einem Remote-Server zu empfangen, wobei die Datenverarbeitungseinheit dafür eingerichtet ist, einen Sonnen-Elevationswert zu erfassen und auf Basis der erfassten UV-Strahlung und des Ozonwerts einen UV-Belastungswert zu ermitteln und zur Information eines Nutzers aufzubereiten. Durch die Erfassung des Ozonwerts (beispielsweise einer Ozonmenge oder Ozonschichtdicke, gemessen in der Einheit "Dobson") kann aus der gemessenen UV-Strahlung auf eine spektrale Verteilung der UV-Strahlung geschlossen werden, welche wiederum eine Bestimmung eines an den oben erwähnten UV-Index angelehnten UV-Belastungswerts erlaubt. Der UV-Belastungswert hat somit wesentlich höhere Aussagekraft für die Belastung der menschlichen Haut am Standort als der reine UV-Strahlungsmesswert.

In der Datenverarbeitungseinheit ist eine Transferfunktion hinterlegt, durch welche der UV-Belastungswert zu einem vorbestimmten Zeitpunkt ermittelbar ist aus der UV-Strahlung zu dem vorbestimmten Zeitpunkt, dem Ozonwert zu dem vorbestimmten Zeitpunkt oder/und dem Sonnen-Elevationswert zu dem vorbestimmten Zeitpunkt.

Gemäß einem zweiten Aspekt der Erfindung wird ein Verfahren zur Ermittlung einer UV-Belastung bereitgestellt, vorzugsweise unter Verwendung eines Systems des ersten Aspekts der Erfindung, wobei das Verfahren die folgenden Schritte umfasst:

- Erfassen einer eingestrahlten UV-Strahlung an einem Standort,
- Empfangen eines auf eine Ozonsituation bezogenen Ozonwerts für den Standort von einem Remote-Server,
- Ermitteln der Sonnenelevation am aktuellen Ort,
- Ermitteln eines UV-Belastungswerts auf Basis der erfassten UV-Strahlung und des Ozonwerts.

Mit diesem Verfahren werden die oben in Bezug auf das System des ersten Aspekts beschriebenen Vorteile erreicht.

Die Erfindung nach dem ersten und zweiten Aspekt umfasst ferner die Erzeugung einer Transferfunktion, durch welche der UV-Belastungswert aus der UV-Strahlung, dem Ozonwert oder/und dem Sonnen-Elevationswert ermittelbar ist. Die Transferfunktion wird unter Verwendung eines trainierten neuronalen Netzwerkes ermittelt, wobei das neuronale Netzwerk unter Verwendung einer Mehrzahl von Trainingsdatensätzen trainiert wurde, wobei jeder Trainingsdatensatz für eine vorbestimmte Einstrahlungssituation einen UV-Strahlungswert, einen zugeordneten Ozonwert, einen zugeordneten Sonnen-Elevationswert und einen zugeordneten UV-Belastungswert oder UV-Index aufweist. Das neuronale Netzwerk kann ein Multilayer-Perceptron (MLP) sein.

Die Erfindung wird nachfolgend anhand eines bevorzugten Ausführungsbeispiels unter Bezugnahme auf die beigefügte Zeichnung näher erläutert. Es zeigen:

Fig. 1      eine schematische Darstellung eines UV-Bodyguard-Systems gemäß einer Ausführungsform der vorliegenden Erfindung,

Fig. 2      eine spektrale Sensitivität eines UV-Sensors der Ausführungsform, eine Erythemfunktion und einen Strahlungsfluss bei hoch- und tiefstehender Sonne,

Fig. 3      eine Darstellung einer Modulation des solaren Strahlungsflusses aufgrund unterschiedlich hoher Ozonmengen in der Stratosphäre,

Fig. 4      Sensor-Messwert ("Sensor Count") und UV-Index als Funktion des Sonnenzenitwinkels (SZW) für unterschiedliche stratosphärische Ozonmengen (250, 300 und 550 Dobson Einheiten).

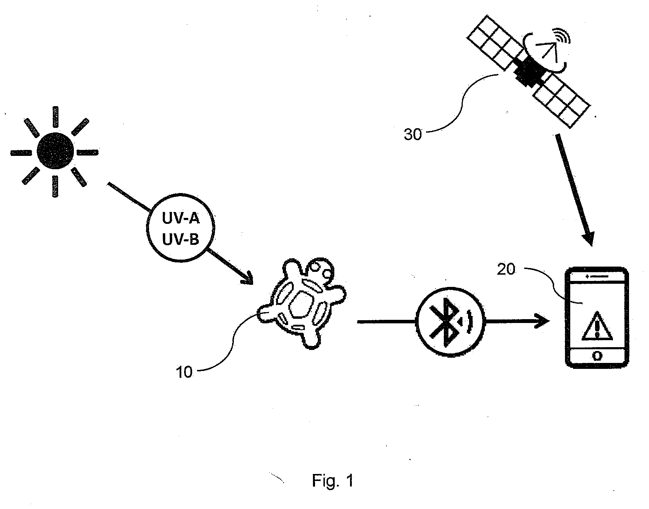

In Fig. 1 wird ein UV-Bodyguard-System schematisch dargestellt, wobei das System eine tragbare Vorrichtung 10 und eine Datenverarbeitungseinheit 20 umfasst, wobei die Datenverarbeitungseinheit 20 vorzugsweise ein Smartphone ist. Die Kommunikation zwischen der Vorrichtung 10 und der Datenverarbeitungseinheit 20 kann kabelgebunden oder kabellos erfolgen, wobei die Kommunikation vorzugsweise per Bluetooth erfolgt. Für eine Positionsbestimmung kann das Smartphone ein GPS-Modul umfassen. Die Positionsbestimmung kann alternativ durch andere technische Mittel (z.B. GSM-Ortung) oder durch manuelle Positionseingabe durch den User erfolgen.

Die tragbare Vorrichtung 10 umfasst wenigstens einen UV-Sensor, welcher dafür eingerichtet ist, wenigstens eine auf die Vorrichtung 10 eingestrahlte UV-Strahlung zu erfassen. Die tragbare Vorrichtung 10 umfasst vorzugsweise ferner ein Gehäuse, wobei in dem Gehäuse die UV-Erfassungseinheit, vorzugsweise auch eine Bluetooth-Schnittstelle, ein Mikroprozessor mit einem Funkmodul, eine aufladbare Batterie, eine Solarzelle sowie ein LED-Modul mit z.B. einer zweifarbigen LED zur Informationsdarstellung (z.B. Batterieladezustand) vorgesehen sind, wobei die oben genannten Komponenten vorzugsweise in eine Leiterplatte integriert sind. Zur Messung der UV-Strahlung kommuniziert der Mikroprozessor mit dem UV-Sensor vorzugsweise via I2C-Protokoll. Der Mikroprozessor kann den UV-Sensor ein- und ausschalten, sowie die Belichtungszeit pro Einzelmessung an die detektierte UV-Strahlungsintensität anpassen.

3

Das Gehäuse besteht vorzugsweise aus einem UV-durchlässigen Kunststoff und einem Elastomer, die als Befestigung und Dichtung dienen. Das Gehäuse wird vorzugsweise in einem zielgruppenspezifischen Design erstellt, z.B. in Form einer Schildkröte für Kinder, wobei das Gehäuse beispielsweise eine Länge von circa 5 cm, eine Breite von circa 4,5 cm und eine Höhe von circa 1,3 - 1,5 cm aufweist. Das Gehäuse kann zweiteilig durch eine Oberseite und eine Unterseite gebildet werden, dieein-ander verhakt werden (geclippt). Auf der Rückseite des Gehäuses findet sich vorzugsweise ein Micro-USB-Stecker, um die Batterie aufzuladen. Alternativ oder zusätzlich kann die Batterie auch durch die Solarzelle aufgeladen werden. Das Gehäuse hat vorzugsweise mindestens eine Öffnung, durch die z.B. ein Klettband oder Clip zur weiteren Befestigung auf einem Sonnenhut oder Rucksack durchgezogen werden kann. Alternative Befestigungen wie z.B. Festnähen oder Festbinden sind auch denkbar. Um die Richtungsabhängigkeit des UV-Sensors zu reduzieren und eine ungehinderte Belichtung des Sensors her- bzw. sicherzustellen, ist das Gehäuse auf der Oberseite vorzugsweise mit einer großen Öffnung in Form eines Fensters oder einer Linse versehen. Die tragbare Vorrichtung 10 kann am Rucksack oder Sonnenhut befestigt werden, wobei die Ausrichtung der Vorrichtung zur Sonne bei der Befestigung beachtet werden sollte.

Die tragbare Vorrichtung 10 wird vorzugsweise per Bluetooth mit dem Smartphone 20 gekoppelt und sendet die gemessenen UV-Werte in einem vom Hersteller oder Benutzer definierten Rhythmus in Echtzeit an das Smartphone 20.

Sollte die Verbindung zum Beispiel durch zu große Entfernung zwischen der Vorrichtung 10 und dem Smartphone 20 abreißen, wird diese Verbindung, sobald die Vorrichtung 10 und das Smartphone 20 sich z.B. wieder in einer Reichweite <10m befinden, automatisch wiederhergestellt und die noch fehlenden Daten werden übertragen. Je nach Speicherkapazität kann eine gewisse Menge von Daten in der Vorrichtung 10 auf dem UV-Sensor bzw. dem zugehörigen Mikroprozessor gespeichert werden, vorzugsweise bis zu einer Messungszeit von 2,5 Stunden.

Auf dem Smartphone 20 wird vorzugsweise eine Anwendungssoftware, eine sogenannte App, installiert, wobei die App vorzugsweise dafür eingerichtet ist, empfangene UV-Messwerte auszuwerten und die Auswertungsergebnisse sowie weitere Informationen für den Nutzer zu visualisieren. Die Auswertungsergebnisse umfassen beispielsweise die aktuelle UV-Stärke, die bisherige UV-Dosis, den aktuellen Sonnenstand sowie eine weitere Entwicklung des Sonnenstands sowie die noch verbleibende Zeit in der Sonne um ein Überschreiten über eine erlaubte UV-Dosis zu vermeiden. Bei einer Überschreitung definierter Grenzwerte kann die App den Nutzer warnen.

Es ist anzumerken, dass die Grenzwerte benutzerspezifisch sein und von vielen Faktoren beeinflusst werden können, wie z.B. dem Hauttyp des Benutzers, dem verwendeten Lichtschutzfaktor der Sonnencreme, usw. Deswegen ist die App vorzugsweise dafür eingerichtet, benutzerspezifische Daten zu empfangen (z.B. durch ein Eingabe-Fenster), wobei die Prognose bzw. die Grenzwerte ferner auf Basis der benutzerspezifischen Daten erstellt werden können.

Um eine Prognose über die verbleibende Zeit in der Sonne zu erstellen, ist das Smartphone vorzugsweise dafür eingerichtet, UV-Forecast-Daten von dem Copernicus Atmosphere Monitoring Service (CAMS) 30 zu empfangen. Allerdings können die empfangenen UV-Forecast-Daten aufgrund vieler Faktoren wie Wolken, des Bodentyps sowie der Geländehöhe stark von der tatsächlich gemessenen UV-Strahlung abweichen. Um die Prognose zu verbessern, ist das Smartphone vorzugsweise dafür eingerichtet, eine Korrekturfunktion auf Basis der in der Vergangenheit spätestens bis zum aktuellen Zeitpunkt empfangene UV-Strahlung und den zeitlich entsprechenden vergangenen UV-Forecast-Daten abzuleiten, sodass zukünftige UV-Forecast-Daten mit der Korrekturfunktion angepasst werden können.

Ein Messwert einer UV-Strahlung und die der UV-Strahlung zeitlich entsprechenden UV-Forecast-Daten werden vorzugsweise nur dann für die Ableitung der Korrekturfunktion verwendet, wenn zum Zeitpunkt der Erfassung des Messwertes die erzeugte Stromstärke der Solarzelle einen bestimmten Schwellwert überschreitet. Somit kann vermieden werden, dass Messdaten und entsprechende Forecast-Daten verwendet werden, wenn sich zum Zeitpunkt der Messung der Benutzer mit der tragbaren Vorrichtung innerhalb eines Gebäudes oder im starken Schatten befindet, wobei solche Messdaten selbstverständlich stark von den Forecast-Daten abweichen und somit zu einer fehlerhaften Korrekturfunktion führen können.

Alternativ oder zusätzlich kann das Smartphone auch dafür eingerichtet sein, weitere Informationen über z.B. Wolkenmodell, Bodentypen und Geländehöhen zu empfangen, und die empfangenden UV-Forecast-Daten ausschließlich oder zusätzlich auf Basis solcher Informationen anpassen.

In dem Smartphone 20 kann eine Transferfunktion hinterlegt sein, durch welche ein UV-Belastungswert, insbesondere eine UV-Index oder ein den UV-Index angebender Wert, aus einem Ozonwert und einem Sonnen-Elevationswert ermittelbar ist. Den Ozonwert kann das Smartphone vom Copernicus Atmosphere Monitoring Service (CAMS) 30 empfangen. Den Sonnen-Elevationswert kann das Smartphone z.B. auf Basis der aktuellen Position, des Datums und der Uhrzeit berechnen oder ebenfalls von einem Remoteserver, aus dem Internet oder vom Copernicus Atmosphere Monitoring Service (CAMS) 30 empfangen.

Ein Beispiel für einen UV-Sensor und eine Transferfunktion wird nachfolgend beschrieben.

Der UV-Sensor der tragbaren Vorrichtung 10 kann beispielsweise eine maximale spektrale Empfindlichkeit bezüglich einfallender elektromagnetischer Wellen bei 315 nm bei einer Halbwertsbreite von 60 nm aufweisen. Diese Halbwertsbreite kann asymmetrisch verteilt sein und einen von Bereich von -20 nm bis +40 nm um die Peak-Empfindlichkeit abdecken. Somit kann der verwendete UV-Sensor unterschiedlich teilweise auf das UVB-Spektrum (280-315nm) und teilweise auf das UVA-Spektrum (315-400nm) reagieren.

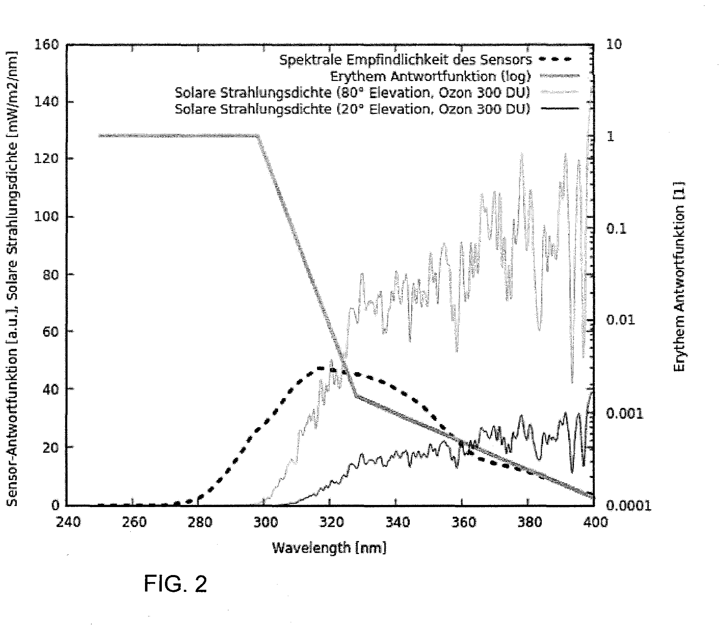

Figur 2 zeigt den spektralen Verlauf der relevanten Größen, nämlich der Sensorempfindlichkeit, der Erythemfunktion sowie der solaren Strahlungsflüsse bei zwei unterschiedlichen Sonnenständen. Bei der Sensorempfindlichkeit ist die optische Wirkung des Gehäuses der Vorrichtung 10, insbesondere der Schutzabdeckung des UV-Sensors mitberücksichtigt.

Der für eine Erythemreaktion relevante Teil des elektromagnetischen Spektrums deckt den Wellenlängenbereich kleiner als 315 nm ab. Die Erythemfunktion ist eine Exponentialfunktion, die sich über eine Vielzahl von Größenordnungen erstreckt.

Die spektrale Empfindlichkeitsverteilung des UV-Sensors ist deutlich breiter als die erytheme Antwortfunktion. Insbesondere wird die SensorEmpfindlichkeit stark durch UV-A beeinflusst. Während UV-B für Sonnenbrand und Vitamin-D-Bildung in der Haut verantwortlich ist, verursacht UV-A vor allem langfristige Effekte, wie die Hautalterung.

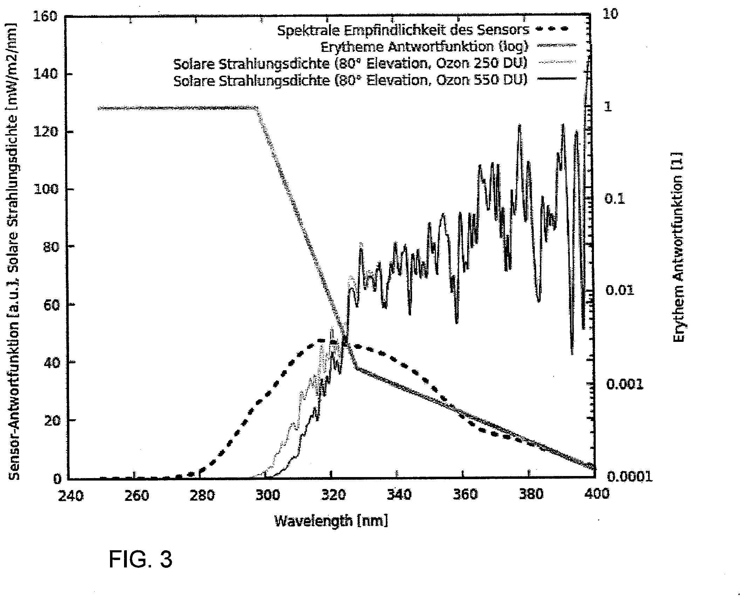

Aufgrund dieser breiten Empfindlichkeitsverteilung des UV-Sensors werden Unterschiede der Dicke der Ozonschicht - die durch die Erythemfunktion hoch gewichtet werden - nicht aufgelöst oder nur schwach. Figur 3 veranschaulicht diesen Zusammenhang für hohe Ozonwerte (z.B. 550 Dobson Einheiten) und niedrige Ozonwerte (z.B. 250 Dobson Einheiten) in der Stratosphäre, bei gleichem Sonnenstand an der aktuellen Position des Smartphones 20.

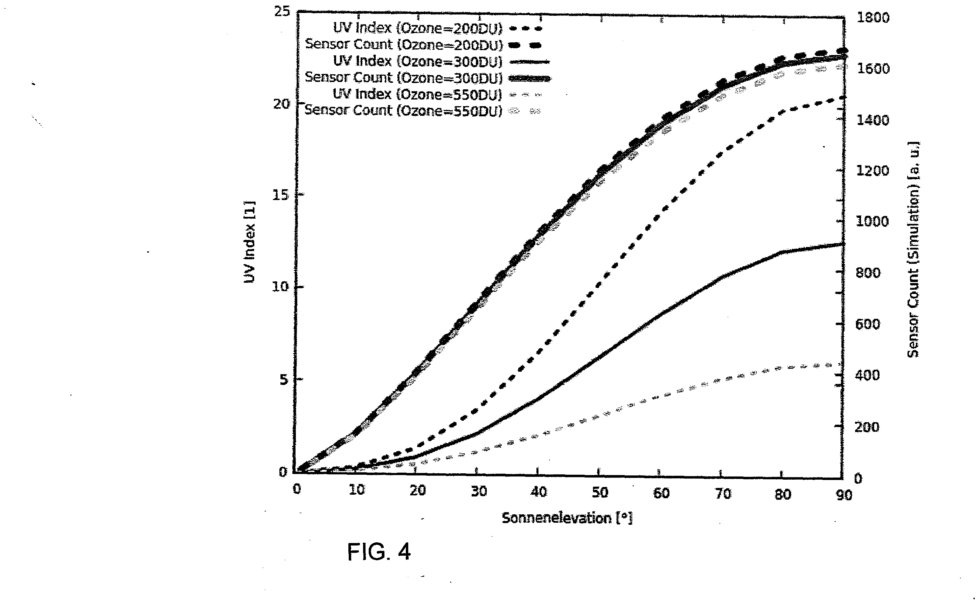

Quantitativ stellt sich dies so dar, wie in Figur 4 gezeigt. Hierin sind die simulierten Sensor-Counts (die durch den UV-Sensor der Vorrichtung 10 gemessene UV-Strahlung) für Sonnenelevation von 90° (Sonne steht im Zenit) bis 0° (Sonne befindet sich am Horizont) für die stratosphärischen Ozonwerte (Ozonschichtdicken) von 200, 300 und 550 Dobson Einheiten gezeigt. Unabhängig Ozonwert weisen die Sensor-Counts kaum voneinander unterscheidbare Werte auf. Der UV-Index ändert sich hingegen stark und ist zum Beispiel im Fall der im Zenit stehenden Sonne (SZA=0°) etwa 7 (550 DE), 13 (300 DE) oder 21 (200 DE).

Zur Ableitung des korrekten erythem wirksamen UV-Index ist gemäß dem Ausführungsbeispiel der Erfindung somit eine Transferfunktion vorgesehen, die die aktuelle Ozonsituation (Ozonwert) und die aktuelle Sonnenelevation einbezieht. Die Transferfunktion kann dabei durch Training eines Multilayer-Perceptrons (MLP) erzeugt werden. Ausgangsdaten können simulierte spektrale Intensitäten für den UV-Sensor und für die Erythem-Antwortfunktion sein. Die so ermittelte Transferfunktion kann tabelliert und in die auf dem Smartphone 20 befindliche App integriert sein. Dies ermöglicht eine effiziente, insbesondere stromsparende, Übersetzung der gemessenen UV-Sensordaten des der Vorrichtung 10 in den tatsächlichen hautrelevanten UV-Belastungswert, insbesondere den UV-Index.

## Patentansprüche

1. System zur Ermittlung einer UV-Belastung, umfassend:

   - eine tragbare Vorrichtung (10), umfassend eine UV-Erfassungseinheit, welche dafür eingerichtet ist, eine auf die UV-Erfassungseinheit eingestrahlte UV-Strahlung zu erfassen,
   - eine Datenverarbeitungseinheit (20), die dafür eingerichtet ist, wenigstens einen Messwert der erfassten UV-Strahlung von der Vorrichtung zu empfangen,
   wobei die Datenverarbeitungseinheit ferner dafür eingerichtet ist, einen auf die stratosphärische Ozonsituation bezogenen Ozonwert für einen Standort, an dem sich die UV-Erfassungseinheit befindet, aus einem Remote-Server zu empfangen,
   wobei die Datenverarbeitungseinheit (20) ferner dafür eingerichtet ist, einen Sonnen-Elevationswert zu erfassen,
   **wobei** die Datenverarbeitungseinheit (20) ferner dafür eingerichtet ist, auf Basis der erfassten UV-Strahlung und des Ozonwerts einen UV-Belastungswert zu ermitteln und zur Information eines Nutzers aufzubereiten,
   wobei in der Datenverarbeitungseinheit (20) eine Transferfunktion hinterlegt ist, durch welche der UV-Belastungswert zu einem vorbestimmten Zeitpunkt ermittelbar ist aus der UV-Strahlung zu dem vorbestimmten Zeitpunkt, dem Ozonwert zu dem vorbestimmten Zeitpunkt und dem Sonnen-Elevationswert zu dem vorbestimmten Zeitpunkt,
   **dadurch gekennzeichet, dass** die Transferfunktion unter Verwendung eines trainierten neuronalen Netzwerkes ermittelt wird, wobei das neuronale Netzwerk unter Verwendung einer Mehrzahl von Trainingsdatensätzen trainiert wird, wobei jeder Trainingsdatensatz für eine vorbestimmte Einstrahlungssituation einen UV-Strahlungswert, einen zugeordneten Ozonwert, einen zugeordneten Sonnen-Elevationswert und einen zugeordneten UV-Belastungswert aufweist.

2. Verfahren zur Ermittlung einer UV-Belastung, wobei das Verfahren die folgenden Schritte umfasst:

   - Erfassen einer eingestrahlten UV-Strahlung an einem Standort,

- Empfangen eines auf eine Ozonsituation bezogenen Ozonwerts für den Standort von einem Remote-Server,

- Ermitteln der Sonnenelevation am aktuellen Ort,

- Ermitteln eines UV-Belastungswerts zu einem vorbestimmten Zeitpunkt aus der UV-Strahlung zu dem vorbestimmten Zeitpunkt, dem Ozonwert zu dem vorbestimmten Zeitpunkt und dem Sonnen-Elevationswert zu dem vorbestimmten Zeitpunkt durch eine Transferfunktion,

**dadurch gekennzeichnet, dass** die Transferfunktion unter Verwendung eines trainierten neuronalen Netzwerkes ermittelt wird, wobei das neuronale Netzwerk unter Verwendung einer Mehrzahl von Trainingsdatensätzen trainiert wird, wobei jeder Trainingsdatensatz für eine vorbestimmte Einstrahlungssituation einen UV-Strahlungswert, einen zugeordneten Ozonwert, einen zugeordneten Sonnen-Elevationswert und einen zugeordneten UV-Belastungswert aufweist.

## Claims

1. System for determining UV-exposure, comprising:

    - a portable device (10) comprising a UV detection unit configured to detect UV radiation irradiated onto the UV detection unit,

    - a data processing unit (20) configured to receive at least one measurement value of the detected UV radiation from the device,

    wherein the data processing unit is further configured to receive from a remote server an ozone value related to the stratospheric ozone situation for a location at which the UV detection unit is positioned,

    wherein the data processing unit (20) is further configured to detect a solar elevation value,

    wherein the data processing unit (20) is further configured to determine a UV evaluation value based on the detected UV radiation and the ozone value and to process it for informing a user,

    wherein in the data processing unit (20) a transfer function is stored, by means of which the UV exposure value can be determined at a predetermined time from the UV radiation at the predetermined time, the ozone value at the predetermined time and the solar elevation value at the predetermined time,

    **characterized in that** the transfer function is determined using a trained neural network, wherein the neural network is trained using a plurality of training datasets,

wherein each training dataset for a predetermined irradiation situation has a UV radiation value, an associated ozone value, an associated solar elevation value and an associated UV exposure value.

2. Method for determining UV-exposure, wherein the method comprises the following steps:

    - detecting an irradiated UV radiation at a location,

    - receiving an ozone value for the location related to an ozone situation from a remote server,

    - determining the solar elevation value at the current location,

    - determining a UV exposure value at a predetermined time from the UV radiation at the predetermined time, the ozone value at the predetermined time and the solar elevation value at the predetermined time by means of a transfer function, **characterized in that** the transfer function is determined using a trained neural network, wherein the neural network is trained using a plurality of training datasets, wherein each training dataset for a predetermined irradiation situation has a UV radiation value, an associated ozone value, an associated solar elevation value and an associated UV exposure value.

## Revendications

1. Système de détermination de l'exposition aux UV, comprenant:

    - un dispositif portable (10) comprenant une unité de détection des UV configurée pour détecter le rayonnement UV irradié sur l'unité de détection des UV,

    - une unité de traitement des données (20) configurée pour recevoir du dispositif au moins une valeur de mesure du rayonnement UV détecté,

    L'unité de traitement des données est en outre configurée pour recevoir d'un serveur distant une valeur d'ozone liée à la situation de l'ozone stratosphérique pour un lieu où l'unité de détection des UV est positionnée,

    l'unité de traitement des données (20) est en outre configurée pour détecter une valeur d'élévation solaire,

    l'unité de traitement des données (20) est en outre configurée pour déterminer une valeur d'évaluation des UV sur la base du rayonnement UV détecté et de la valeur de l'ozone et pour la traiter afin d'informer un utilisateur,

    dans lequel l'unité de traitement des données (20) enregistre une fonction de transfert permettant de déterminer la valeur d'exposition aux UV à un moment prédéterminé à partir du rayonnement UV au moment prédéterminé, de la valeur de l'ozone au moment prédéterminé et de la valeur de l'élévation solaire au moment prédéterminé,

**caractérisé par le fait que** la fonction de transfert est déterminée à l'aide d'un réseau neuronal entraîné, le réseau neuronal étant entraîné à l'aide de plusieurs ensembles de données d'entraînement, chaque ensemble de données d'entraînement pour une situation d'irradiation prédéterminée comportant une valeur de rayonnement UV, une valeur d'ozone associée, une valeur d'élévation solaire associée et une valeur d'exposition aux UV associée.

2. Méthode de détermination de l'exposition aux UV, dans laquelle la méthode comprend les étapes suivantes :

   - la détection d'un rayonnement UV irradié à un endroit donné,
   - recevoir d'un serveur distant une valeur d'ozone pour le lieu concerné par une situation d'ozone,
   - déterminer la valeur de l'élévation solaire à l'emplacement actuel,
   - déterminer une valeur d'exposition aux UV à un moment prédéterminé à partir du rayonnement UV au moment prédéterminé, de la valeur de l'ozone au moment prédéterminé et de la valeur de l'élévation solaire au moment prédéterminé au moyen d'une fonction de transfert,

   **caractérisé par le fait que** la fonction de transfert est déterminée à l'aide d'un réseau neuronal entraîné, le réseau neuronal étant entraîné à l'aide de plusieurs ensembles de données d'entraînement, chaque ensemble de données d'entraînement pour une situation d'irradiation prédéterminée comportant une valeur de rayonnement UV, une valeur d'ozone associée, une valeur d'élévation solaire associée et une valeur d'exposition aux UV associée.

Fig. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018208166 A2